# EUROPÄISCHE PATENTANMELDUNG

(11) **EP 2 148 045 A1**
(43) Veröffentlichungstag der Anmeldung: **27.01.2010**
(21) Anmeldenummer: 08013470.3
(22) Anmeldetag: 25.07.2008
(51) Int. Cl.: F01D 25/14

(54) **Gehäuseabschnitt für eine Gasturbine**

(71) Anmelder: Siemens Aktiengesellschaft, 80333 München (DE)
(72) Erfinder: Benkler, Francois, Dr., 40880 Ratingen (DE); Böttcher, Andreas, Dr., 40882 Ratingen (DE); Grundei, Daniel, 46049 Oberhausen (DE); Lohse, Uwe, 42899 Remscheid (DE); Maldfeld, Ekkehard, Dr., 45479 Mülheim an der Ruhr (DE); Meimerstorf, Maximilian, 47551 Bedburg-Hau (DE); Schneider, Oliver, Dr., 46487 Wesel (DE); Socha, Waldemar, 10555 Berlin (DE)

(57) **Zusammenfassung**

Es wird ein Gehäuseabschnitt (10) für eine Gasturbine vorgestellt, welcher sich rohrartig in Axialrichtung erstreckt.
Zur Angleichung der Materialtemperaturen des Gehäuseabschnittes (10) zwischen zwei axialen Positionen ist zumindest ein sich in Axialrichtung erstreckendes Wärmerohr (22) vorgesehen, mittels dem die Materialtemperatur in einem wärmeren Bereich des Gehäuseabschnitts (10) abgesenkt und in einem kühleren Bereich des Gehäuseabschnitts (10) angehoben werden kann.
Ein derartiger Gehäuseabschnitt (10) ermöglicht das Führen von Stoffen in seinem Inneren, welche weiter erhöhte Temperaturen aufweisen, ohne dass dadurch höherwertige bzw. hochtemperaturfeste Werkstoffe für den Gehäuseabschnitt (10) verwendet werden müssen.

## Beschreibung

Die Erfindung betrifft einen Gehäuseabschnitt für eine Gasturbine, welcher sich rohrartig in Axialrichtung erstreckt.

Bekanntermaßen umfassen Gasturbinen einen oder mehrere Gehäuseabschnitte, die einerseits als axial benachbarte Druckmäntel für ein im Inneren der Gasturbine geführtes Medium ausgebildet sein können. Andererseits kann der Gehäuseabschnitt auch als ein innerhalb des Druckmantels angeordnetes Innengehäuse ausgebildet sein, an dessen Innenseite Leitschaufeln in Kränzen befestigt sind. Die Leitschaufeln können dabei die eines Verdichters oder einer Turbineneinheit sein, so dass der Gehäuseabschnitt dann entweder als Verdichterleitschaufelträger oder als Turbinenleitschaufelträger ausgebildet ist. Jeder dieser vorgenannten Gehäuseabschnitte nimmt während des Betriebs der Gasturbine annähernd die Temperaturen an, die in seinem Abschnitt im Inneren auftreten.

Da die Entwicklung bei Gasturbinen zu höheren Turbineneintrittstemperaturen und zu höheren Druckverhältnissen für den Verdichter gehen, werden die nachfolgend auch als Gehäusebauteile bezeichneten Gehäuseabschnitte immer weiter steigenden Temperaturbelastungen ausgesetzt. Dies gilt insbesondere für den Turbinenleitschaufelträger, welcher insbesondere thermisch und mechanisch vergleichsweise hoch belastet ist. Aus Kostengründen ist es daher erstrebenswert, einen Werkstoffwechsel der Gehäusebauteile von einem konventionellen Gusswerkstoff zu einem höherwertigen, temperaturfesteren Stahlgusswerkstoff zu vermeiden.

Aufgabe der Erfindung ist daher die Bereitstellung eines Gehäuseabschnitts für eine Gasturbine, welcher trotz zunehmender Einsatztemperaturen zuverlässig und dauerhaft unter Vermeidung des Einsatzes eines höherwertigen Stahlgusswerkstoffs diesen Stand halten kann.

Die der Erfindung zugrundeliegende Aufgabe wird mit einem Gehäuseabschnitt gelöst, welcher gemäß den Merkmalen des Anspruchs 1 ausgebildet ist.

Die Erfindung sieht vor, dass im Gehäuseabschnitt zumindest ein sich in Axialrichtung erstreckendes Wärmerohr angeordnet ist. Wärmerohre - im Englischen auch als Heat-Pipe bekannt - sind Wärmeüberträger, die unter Nutzung von Verdampfungs- und Kondensationswärme eines in ihnen angeordneten Stoffes einen Wärmetransport ermöglichen. Das Wärmerohr besteht dabei aus einem hermetisch gekapselten Rohr mit zwei Wärmeübertragungsflächen: einer Übertragungsfläche (Heizzone) für eine äußere Wärmequelle und eine weitere Übertragungsfläche (Kühlzone) für eine äußere Wärmesenke. In dem Rohr ist ein Fluid eingeschlossen, das bei den Temperaturen der Wärmequelle bzw. Wärmesenke verdampft bzw. kondensiert. Der an der äußeren Wärmequelle im Inneren des Wärmerohres erzeugte Fluid-Dampf strömt an die Wärmesenke und gibt die aufgenommene Verdampfungswärme durch Kondensation an die dort vorhandene Umgebung ab. Anschließend zirkuliert das Fluid zurück zur Heizzone. Kühlzone und Heizzone sind dabei Begriffe, welche sich auf das im Inneren des im Wärmerohr zirkulierenden Fluids beziehen.

Durch das Wärmerohr kann in besonders einfacher Art und Weise Wärmeenergie aus den heißeren Bereichen des Gehäuseabschnitts zu den kühleren Bereichen des Gehäuseabschnitts geführt werden. Hierdurch werden die Materialtemperaturen in den heißeren Bereichen des Gehäuseabschnitts gesenkt und die Temperaturen in den kühleren Bereichen des Gehäuseabschnitts angehoben. Dies erhöht zwar die bisher geringere thermische Belastung im kühleren Bereich, jedoch bleibt diese insgesamt weiterhin innerhalb der zulässigen thermischen Belastung.

Insbesondere hierdurch kann die Temperatur im Gehäuseabschnitt entlang seiner Axialrichtung vergleichmäßigt werden.

Das Temperaturgefälle wird insgesamt verringert. Da die Wahl des Materials des Gehäuseabschnitts in Abhängigkeit von den höchsten Einsatztemperaturen erfolgt, kann durch deren Absenkung durch Verwendung der Wärmerohre ein weniger temperaturfestes Material gewählt und verwendet werden im Vergleich zu einem Gehäuseabschnitt ohne Wärmerohr.

Insgesamt ermöglicht dies auch die Erhöhung der Temperatur des Heißgases oder der zu verdichtenden Luft, ohne dass dadurch ein höherwertiger Stahlgusswerkstoff für den betreffenden Gehäuseabschnitt erforderlich wird. Die Lösung besteht also prinzipiell darin, die Kühlung des Gehäuseabschnitts autark auszugestalten, also ohne den "Verbrauch" eines Kühlmediums. Da die Wärmerohre völlig eigenständig arbeiten, fällt zudem kein weiterer Wartungs- und Pflegeaufwand an. Zumal Wärmerohre kommerziell verfügbar sind, kann bei korrekter Auslegung des erfindungsgemäßen Gehäuseabschnitts die Betriebssicherheit unbeeinträchtigt aufrechterhalten werden.

Vorteilhafte Ausgestaltungen sind nachfolgend beschrieben und in den Unteransprüchen aufgeführt.

Um den Gehäuseabschnitt entlang seines Umfangs gleichmäßig thermisch zu manipulieren, sind entlang dessen mehrere Wärmerohre vorgesehen, die gleichmäßig verteilt sind.

Zweckmäßigerweise weist der Gehäuseabschnitt in Axialrichtung verlaufende Bohrungen auf, in welche jeweils ein Wärmerohr mit korrespondierendem Durchmesser eingesetzt ist. Durch diese Ausgestaltungen ist besonders einfach ein erfindungsgemäßer Gehäuseabschnitt herstellbar. Alternativ dazu ist auch denkbar, dass das Wärmerohr beim Guss des Gehäuseabschnitts in diesen mit eingegossen wird.

Sofern der Gehäuseabschnitt der einer stationären Gasturbine ist, kann dieser aus zwei halbrohrartigen Bauteilen gebildet sein, die flanschartig aneinanderliegen und miteinander verschraubt sind. Demzufolge ist der Gehäuseabschnitt lediglich als Halbring ausgebildet mit einer axialen Erstreckung, parallel zu welcher die Wärmerohre angeordnet sind.

Der Gehäuseabschnitt kann dabei als ein äußeres Gehäuse der Gasturbine oder als ein äußeres Gehäuse eines Gasturbinenverdichters ausgebildet sein und somit als Druckmantel dienen. Selbstverständlich ist auch denkbar, dass der Gehäuseabschnitt als ein im Inneren eines Außengehäuses der Gasturbine angeordneter Leitschaufelträger ausgebildet ist. Insbesondere in diesem Fall ist die Verwendung von Wärmerohren von besonderem Vorteil, da ein als Verdichter- und/oder Turbinenleitschaufelträger ausgebildeter Gehäuseabschnitt vergleichsweise hohen Temperaturen ausgesetzt ist, die im Inneren des Verdichters bzw. der Turbineneinheit der Gasturbine auftreten.

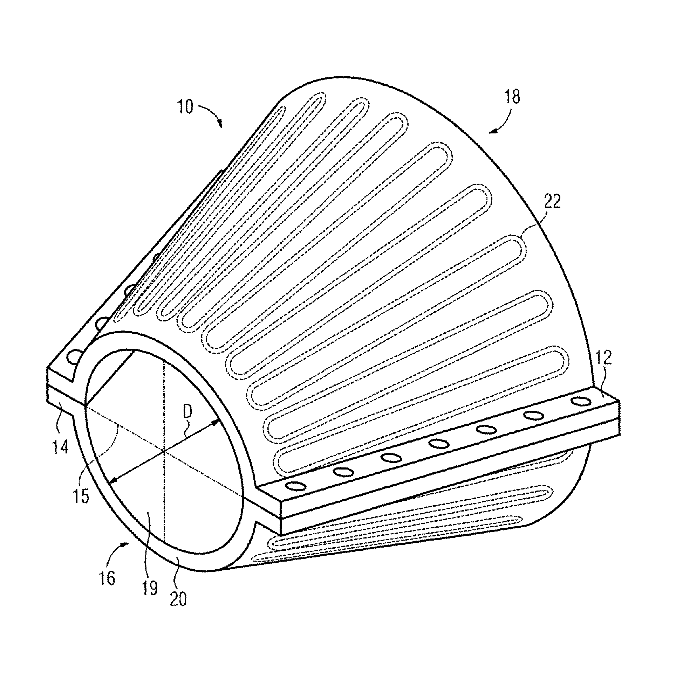

Nachfolgend wird die Erfindung anhand einer Zeichnung erläutert. Aus der Zeichnung und der Figurenbeschreibung ergeben sich weitere Merkmale und Vorteile der Erfindung.

Die einzige Figur zeigt eine perspektivische Darstellung eines Gehäuseabschnittes einer Gasturbine.

Die einzige Figur zeigt in perspektivischer schematischer Darstellung einen Gehäuseabschnitt 10 für eine stationäre, axial durchströmte Gasturbine. Für die Erfindung nicht relevante Merkmale des Gehäuseabschnitts 10 sind in den Figuren nicht dargestellt. Der Gehäuseabschnitts 10 kann aus zwei halbrohrartigen Leitschaufelträgerelementen 12, 14 gebildet sein, wobei das Leitschaufelträgerelement 12 die obere Hälfte des Gehäuseabschnitts 10 bildet und das Leitschaufelträgerelement 14 dessen untere Hälfte. Die Leitschaufelträgerelemente 12, 14 können dabei selbstverständlich die einer Turbine oder auch die eines Verdichters sein. Anstelle von Leitschaufelträgern kann der Gehäuseabschnitt 10 auch als ein äußeres Gehäuse der Gasturbine und/oder als dessen äußeres Verdichtergehäuses ausgebildet sein.

Nachfolgend wird die Erfindung lediglich für einen als Turbinenleitschaufelträger ausgebildeten Gehäuseabschnitt 10 näher erläutert.

Die Leitschaufelträgerelemente 12, 14 liegen in einer Teilungsebene 15 flanschartig aneinander. Durch sich durch deren Flansche erstreckende, nicht dargestellte Schrauben sind die Leitschaufelträgerelemente 12, 14 miteinander fest verbunden.

Der Turbinenleitschaufelträger 10 weist eine axiale Erstreckung auf, entlang welcher er konisch ausgebildet ist. Demgemäß weist der im Querschnitt kreisförmige Turbinenleitschaufelträger 10 ein erstes Ende 16 sowie ein dem ersten Ende 16 gegenüberliegendes zweites Ende 18 auf. Der innere Durchmesser D des ersten Endes 16 ist dabei wesentlich kleiner als der innere Durchmesser des zweiten Endes 18. Gleiches gilt für die äußeren Durchmesser.

Bei einem dagegen als Verdichterleitschaufelträger ausgebildetem Gehäuseabschnitt 10 weist dessen einströmseitige Ende einen größerem Durchmesser aufweist als dessen ausströmseitige, der Brennkammer zugewandte Ende, wobei am ausströmseitigen Ende bekanntermaßen größere Temperaturen während des Betriebes auftreten als am einströmseitigen Ende.

Verwendet in einer stationären Gasturbine ist der Turbinenleitschaufelträger 10 derartig in einem Druckmantel, d.h. in einem äußerem Gehäuse - der Gasturbine angeordnet, dass das erste Ende 16 dem Auslass einer nicht weiter dargestellten Brennkammer gegenüberliegt. Das zweite Ende 18 des Turbinenleitschaufelträgers 10 liegt dann einem nicht dargestellten Ausgangsdiffusor der Gasturbine gegenüber.

In einem vom Turbinenleitschaufelträger 10 umfassten Innenraum 19 erstreckt sich in Axialrichtung ein Strömungspfad, welcher radial außen sowie radial innen von geeigneten Elementen, d.h. Plattformen von Turbinenschaufeln und Führungsringen begrenzt wird. Der Klarheit halber sind diese Elemente in der FIG nicht dargestellt, ebenso wenig wie der innerhalb des Turbinenleitschaufelträgers 10 im Querschnitt ringförmig ausgestaltete Strömungspfad für das in der Brennkammer erzeugte Heißgas. Bezogen auf das Heißgas und dessen Strömungsrichtung ist das erste Ende 16 des Turbinenleitschaufelträgers 10 das einströmseitige Ende 16 und das zweite Ende 18 das ausströmseitige Ende 18.

Der Turbinenleitschaufelträger 10 wird prinzipiell von einer rohrförmigen Wand 20 gebildet. In der Wand 20 des Turbinenleitschaufelträgers 10 sind über den Umfang verteilt eine Vielzahl von sich in Axialrichtung erstreckenden Wärmerohren 22 eingebettet, so dass deren Wärmeübertragungsflächen vorzugsweise vollständig vom Material des Turbinenleitschaufelträgers 10 umgeben sind.

Das einströmseitige Ende 16 des Turbinenleitschaufelträgers 10 ist während des Betriebs der Gasturbine höheren Temperaturen ausgesetzt als dessen ausströmseitiges Ende 18. Zur Vergleichmäßigung der im Turbinenleitschaufelträger 10 auftretenden Temperaturen sind die Wärmerohre 22 vorgesehen. Diese führen Wärmeenergie vom einströmseitigen Ende 16 zum abströmseitigen Ende 18, wobei währenddessen die Materialtemperatur am einströmseitigen Ende 16 abgesenkt und die Materialtemperatur am ausströmseitigen Ende 18 angehoben wird. Da ohnehin das einströmseitige Ende 16 höheren Temperaturen ausgesetzt ist als das ausströmseitige Ende 18, erfolgt mit der Absenkung im vorderen Bereich und der Anhebung der Temperatur im hinteren Bereich insgesamt eine Vergleichmäßigung des Temperaturniveaus im Turbinenleitschaufelträger 10 entlang seiner Axialrichtung. Der Wärmetransport wird durch das im Inneren der Wärmerohre 22 angeordnete Fluid erreicht, welches Wärme in der Heizzone (vorderer Teil des Turbinenleitschaufelträgers) durch Verdampfung aufnimmt und im hinteren Teil des Leitschaufelträgers - Kühlzone - durch Kondensation wieder abgibt. Kühlzone und Heizzone sind dabei Begriffe, welche sich auf das im Inneren des im Wärmerohr 22 zirkulierenden Fluids beziehen. Bezogen auf den Turbinenleitschaufelträger 10 selber ist die vordere, einströmseitige Zone jedoch diejenige Zone, die gekühlt wird und die hintere, ausströmseitige Zone diejenige, die beheizt wird.

Die Zirkulation des Fluids innerhalb des Wärmerohres 22 kann durch Schwerkraft oder durch die Kapillarwirkung eines Dochtes oder sonstigen geeigneten Mitteln erreicht werden.

Insgesamt wird mit der Erfindung ein beispielsweise als Turbinenleitschaufelträger 10 oder auch als Verdichterleitschaufelträger ausgebildeter Gehäuseabschnitt vorgeschlagen, welcher sich rohrartig und/oder auch entsprechend seiner Verwendung konisch in Axialrichtung erstreckt, wobei zur Angleichung der Materialtemperaturen des Gehäuseabschnittes zwischen zwei axialen Positionen zumindest ein sich in Axialrichtung erstreckendes Wärmerohr 22 vorgesehen ist, mittels dem die Materialtemperatur in einem wärmeren Bereich des Gehäuseabschnitts abgesenkt und in einem kühleren Bereich des Gehäuseabschnitts angehoben werden kann.

Ein derartiger Gehäuseabschnitt ermöglicht das Führen von Stoffen in seinem Inneren, welche weiter erhöhte Temperaturen aufweisen, ohne dass dadurch höherwertige bzw. hochtemperaturfeste Werkstoffe für den Gehäuseabschnitt verwendet werden müssen.

## Patentansprüche

1. Gehäuseabschnitt (10) für eine Gasturbine, welcher sich rohrartig in Axialrichtung erstreckt, wobei im Gehäuseabschnitt (10) zumindest ein sich in Axialrichtung erstreckendes Wärmerohr (22) angeordnet ist.

2. Gehäuseabschnitt (10) nach Anspruch 1, bei dem entlang des Umfangs mehrere Wärmerohre (22) vorgesehen sind.

3. Gehäuseabschnitt (10) nach Anspruch 1 oder 2, in welchem sich in Axialrichtung erstreckende Bohrungen vorgesehen sind, in denen jeweils ein Wärmerohr (22) eingesetzt ist.

4. Gehäuseabschnitt (10) nach Anspruch 1, 2 oder 3, welcher aus zwei halbrohrartigen Elementen (12, 14) gebildet ist, die flanschartig aneinanderliegend miteinander verschraubt sind.

5. Gehäuseabschnitt (10) nach einem der vorangehenden Ansprüche,
ausgebildet als äußeres Gehäuse der Gasturbine oder als äußeres Gehäuse eines Gasturbinenverdichters.

6. Gehäuseabschnitt (10) nach einem der vorangehenden Ansprüche,
ausgebildet als im Inneren eines Gehäuse der Gasturbine angeordneter Turbinenleitschaufelträger (10).

7. Gehäuseabschnitt (10) nach einem der vorangehenden Ansprüche,
ausgebildet als im Inneren eines Gehäuse der Gasturbine angeordneter Verdichterleitschaufelträger.
